(19) **Europäisches Patentamt**

**European Patent Office**

**Office européen des brevets**

(11) **EP 1 132 788 B1**

(12) **EUROPEAN PATENT SPECIFICATION**

(45) Date of publication and mention
of the grant of the patent:
**08.10.2003 Bulletin 2003/41**

(51) Int Cl.⁷: **G05B 9/02**, G05B 23/02,
G06F 11/00, G06F 11/30

(21) Application number: **99929892.0**

(22) Date of filing: **16.07.1999**

(86) International application number:
**PCT/JP99/03871**

(87) International publication number:
**WO 00/005630 (03.02.2000 Gazette 2000/05)**

(54) **FAIL-SAFE CONTROLLER**

FEHLERSICHERE STEUERUNG

ORGANE DE COMMANDE A SECURITE INTEGREE

(84) Designated Contracting States:
**DE FR GB**

(30) Priority: **23.07.1998 JP 20730398**
**29.03.1999 JP 8536699**

(43) Date of publication of application:
**12.09.2001 Bulletin 2001/37**

(73) Proprietor: **Hitachi, Ltd.**
**Chiyoda-ku, Tokyo 101-8010 (JP)**

(72) Inventors:
• **TAKEHARA, Takeshi**
**Hitachi-shi, Ibaraki 319-1221 (JP)**
• **YAMAGUCHI, Shinichiro**
**Hitachi-shi, ibaraki 319-1221 (JP)**
• **MIYAZAKI, Naoto**
**Hitachi-shi, Ibaraki 319-1221 (JP)**
• **FUJIWARA, Michio**
**Hitachinaka-shi, Ibaraki 312-0033 (JP)**

(74) Representative: **Strehl Schübel-Hopf & Partner**
**Maximilianstrasse 54**
**80538 München (DE)**

(56) References cited:
**JP-A- 3 147 002**       **JP-A- 8 006 602**
**US-A- 4 584 645**       **US-A- 4 739 469**

**Description**

BACKGROUND OF THE INVENTION

Field of the Invention

The present invention relates to a fail-safe controller, and particularly to a fail-safe controller which uses an alternating signal as a control output for controlling a controlled object.

Prior Art

In a control system for a traffic signal or a gate of railroad crossing, when a failure occurs in the control system and the system must be stopped operation, the operation of the system needs to be stopped in a safe status (for example, the traffic signal is changed to red light, or the gate of railroad crossing is closed).

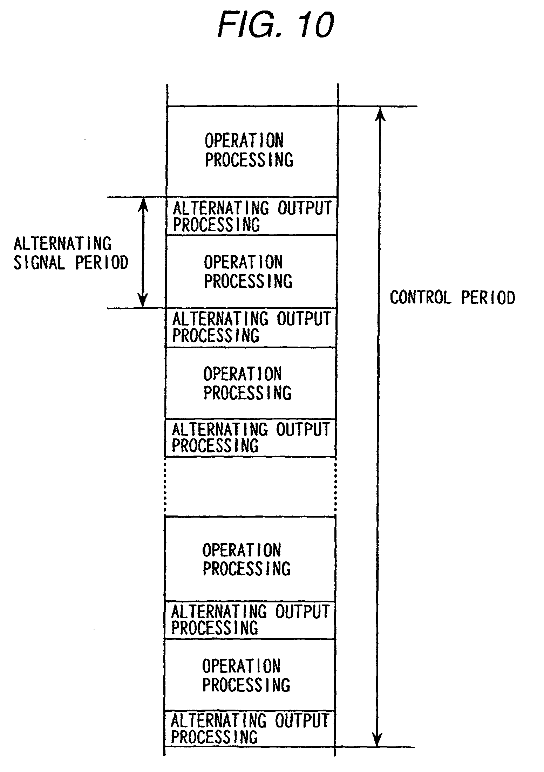

In a control system having a long control period such as a system in the field of railroad, there is a method to use an alternating signal (such as an alternating current signal) as a method of improving safety of a system. The method will be explained below, referring to FIG. 9.

A fail-safe controller 1 acquires a status of a controlled object 6 as an input 3 to execute control operation processing. The fail-safe controller 1 converts a result of the operation processing into a constant-period alternating signal or a fixed value signal to output the signal as a control output 2. The control output 2 is input to a rectifier circuit 4, and the rectifier circuit 4 outputs a logical value 1 only when the constant-period alternating signal is input, and outputs a logical value 0 when the other kinds of signals are input. The controlled object 6 is driven to a safe status when the output of the rectifier circuit 4 is the logical value 0, and driven to a status associated with a danger when the output of the rectifier circuit 4 is the logical value 1. Therefore, the output 2 of the controller 1 is defined as a danger side output when the output 2 is the alternating signal, and defined as a safety side output when the output 2 is the fixed value signal.

When an abnormality occurs in the controller 1, in most cases the control output 2 is fixed to the logical value 1 or the logical value 0. However, since the fixed value signal is regarded as the safety side output, the controlled object is not driven to the danger side and accordingly the system can be maintained in a safe status.

US-A-4,584,645 discloses an emergency operation device wherein, when an unusual condition is detected, the CPU in the control device is reset, and a control signal of unusual condition is output.

US-A-4,739,469 describes a fail-safe circuit for a control system, wherein control signals are switched from a main control circuit to a backup control circuit by providing plural signal lines instead of single control signal lines.

PAJ JP-03147002 discloses a logical circuit, wherein three alternating signals are compared in a majority logic.

PAJ JP-08006602 describes a fail-safe circuit which continues the operation of a control system when operated on the safe side. The circuit comprises an oscillator for outputting an alternating signal and monitor means for monitoring the frequency of the output signal.

As a method of generating the alternating signal, there is the method that an alternating output processing routine for generating an alternating signal is embedded in every alternating signal period of a control operation processing program (this is usually called as a single thread structure), as shown in FIG. 10. If an output during the control period is a danger side output, the alternating output processing repeats inverse outputting of the output value (setting 0 when the output value is 1, and setting 1 when the output value is 0). If an output during the control period is a safety side output, the alternating output processing keeps the output value constant during the control period. When an abnormality occurs in the system to stop the control operation processing, the alternating output processing is also stopped at a time, and the output becomes a fixed value to continue outputting a safety side output. Thus, safety of the system can be kept.

However, in the method shown in FIG. 10, it is necessary to divide the control operation processing program in each of the alternating signal periods after the program is made, and to embed the .alternating output processing routine in each of the alternating signal periods. Further, in a case where the program is changed, the program must be divided again so that the alternating signal period may be not shifted.

As described above, since the conventional technology requires program dividing even when the control period or a part of the contents of the control operation. processing are changed, the efficiency of program production becomes very low. Further, since the period of the alternating signal is necessary to be sufficiently smaller than the control operation period, a large manpower is required to embed the alternating output processing into the control operation processing.

Furthermore, requirement of cost reduction in the fail-safe controller has been stronger and stronger, and accordingly reduction of the development cost and shortening of the developing term are important. Therefore, commonality of the systems becomes inevitable. In order to realize the commonality of the systems, a system configuration capable of easily expanding to various applications. From this viewpoint, a method of making the alternating signal output processing easy is required.

An object of the present invention is to provide a fail-safe. controller of which the operation processing program can be easily created and changed, and by which productivity of the system can be improved.

## SUMMARY OF THE INVENTION

In order to attain the above object, the present invention is characterized by a fail-safe controller which executes operation processing by acquiring a status input of a controlled object, and converts the operation processed result to an alternating signal, and controls a system based on the alternating signal, which comprises a control operation part, the control operation part executing operation processing by acquiring the status input, and outputting the operation processed result; and an output part, the output part converting the operation processed result output from the control operation part to an alternating signal in asynchronism with the operation processing in the control operation part, outputting the alternating signal as a control output for controlling the controlled object, and monitoring the alternating signal to stop outputting the alternating signal when occurrence of an abnormality in said control operating part is recognized.

According to the above construction, the output part executing output processing of the alternating signal is separated from the control operation part, the control operation part can easily create and change the operation processing program without taking the output processing of the alternating signal into consideration, and accordingly the productivity of the operation processing system can be improved.

In the case where the output part executing output processing of the alternating signal is separated from the control operation part, as described above, when an abnormality occurs in the control operation part to continue outputting the instruction to generate the alternating signal from the control operation part, the fail-safe controller may continue outputting the danger side output. However, since the alternating signal is stopped to be output when occurrence of an abnormality in said control operating part is recognized by monitoring the alternating signal, the safety of the system can be secured.

Further, in order to mach timing of the output processing of the alternating signal, the control operation part sends to the output part a signal for instructing starting processing of converting the operation processed result to the alternating signal.

Further, the output part comprises a timer for setting a period of the alternating signal.

Further, the output part comprises a measuring means for measuring number of alternating times of the converted alternating signal; an upper limit setting means for setting an upper limit of alternating times; and an output control means for stopping outputting the control output when number of alternating times measured by the measuring means reaches the limit of alternating times set by the upper limit setting means.

Further, the upper limit setting means is constructed so as to be capable of changing the set upper limit of alternating times. Furthermore, the output control means is constructed in that when the number of alternating times measured by the measuring means reaches the limit of alternating times set by the upper limit setting means, the output control means informs the outside that the number of alternating times measured reaches the limit of alternating times.

## BRIEF DESCRIPTION OF DRAWINGS

FIG. 1 is a block diagram showing the overall configuration of a fail-safe controller in accordance with the present invention.
FIG. 2 is a time chart showing operations of the control operation part and the output part shown in FIG. 1.
FIG. 3 is a block diagram showing the detailed configuration of the alternating output part shown in FIG. 1.
FIG. 4 is a flowchart showing alternating signal generation process in the alternating ouput-generating part shown in FIG. 3.
FIG. 5 is a block diagram showing the detailed configuration of the output-monitoring part shown in FIG. 1.
FIG. 6 a time chart showing operation and signals of the counter shown in FIG. 5.
FIG. 7 is a diagram showing an example of software to which the present invention is applied.
FIG. 8 is a time chart showing operations of the control operation part and the alternating output part shown in FIG. 7.
FIG. 9 is a block diagram showing an example which controls a system to a safety side using an alternating signal output.
FIG. 10 is a a diagram showing a conventional alternating signal output method (single thread structure).

## DESCRIPTION OF THE PREFERRED EMBODIMENTS

An embodiment of the present invention will be described below, referring to the accompanied drawings.

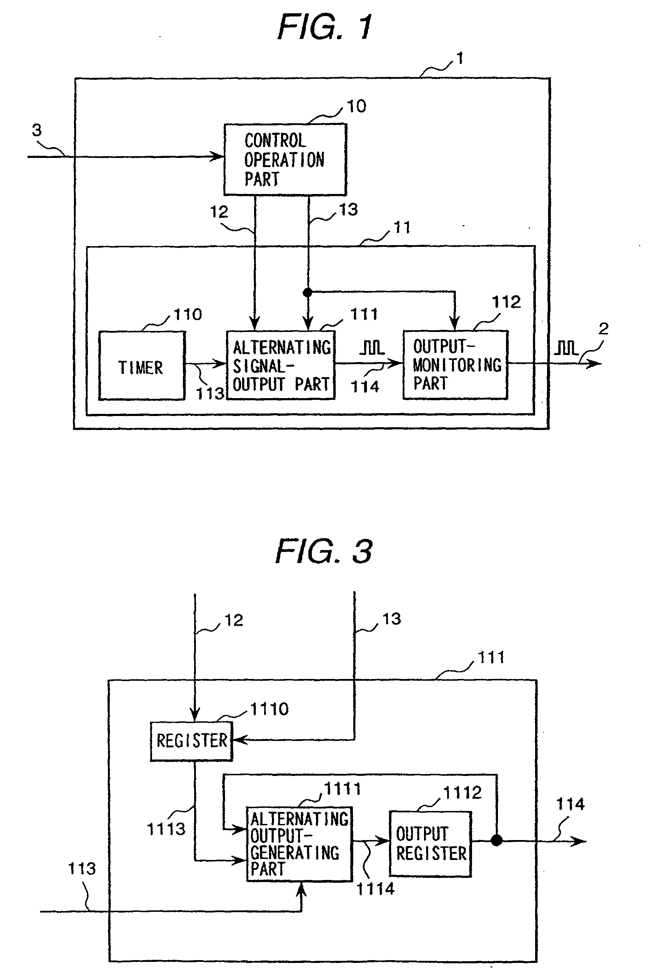

FIG. 1 is a block diagram showing the overall configuration of a fail-safe controller in accordance with the present invention. Referring to FIG. 1, the fail-safe controller 1 acquires a status input 3 of a controlled object to execute control operation processing, and converts the operation processed result into an alternating signal or fixed value signals to output as control outputs. For example, in a railroad crossing control system, such a fail-safe controller 1 is installed in order to control a railroad crossing alarm device for giving an alarm of approaching and passing of a train by light and sound and a railroad crossing gate for interrupting traffic on a road corresponding to input information from. an input device. such as a railroad crossing control device which informs a railroad crossing control unit of approaching of a train to the railroad crossing or a railroad crossing failure detecting device which informs a failure of a railroad crossing unit when the failure occurs in the railroad crossing unit.

The fail-safe controller 1 is composed of a control operation part 10 and an output part 11. The control operation part 10 executes control operation processing to output an operation output 12, and outputs a pulse signal as a control period-starting trigger 13 to inform the output part 2 of starting of a control period. The control period-starting trigger 13 is individually input to an alternating signal-output part 111 and an output-monitoring part 112 in the output part 11.

The output part 11 is composed of a timer 110 for setting a period of the alternating signal, the alternating signal-output part 111 for generating the alternating signal based on the operation output 12, and the output-monitoring part 112 for controlling outputting/stopping of the control output 2 by monitoring an alternating output 114 from the alternating signal-output part 112.

The timer 110 outputs a timer interruption 113 every period of the alternating signal. In the conventional single thread structure, the control operation part and the alternating output processing part can not be operated independently of each other because the alternating signal period is controlled by flow of processing in the control operation part. On the other hand, in the present embodiment, since the period of the alternating signal is controlled by the timer 110, the output part 11 can output the alternating signal by the timer interruption 113 in asynchronism with the operation processing in the control operation part 10.

The alternating signal-output part 111 acquires a value of the operation output 12 every time when the control period-starting trigger 13 is input. Further, every time when a timer interruption 113 is input, the alternating signal-output part 111 inverts a value of output before the timer interruption 113 being input (puts 1 to 0, and puts 0 to 1) if the acquired operated result is a logical value of 1. If the acquired operated result is a logical value of 0, the alternating signal-output part 111 maintains the value of output before the timer interruption 113 being input to output as an alternating output 114.

The output-monitoring part 112 is started observation of the alternating output 114 with the control period-starting trigger 13 to control outputting the control output 2 actually transmitted to the controlled object.

The control operation part 10 only transmits the operation output 12 and the control period-starting trigger 13 to the output part 11, and does not receive any interference from the output part 11. Further, the output part 11 executes alternating signal generating processing with a timer interruption 113 from the timer 110. Therefore, the control operation part 10 does not need to be conscious of the conversion of output signal, and accordingly the control operation part 10 and the output part 11 can be operated in asynchronism with each other.

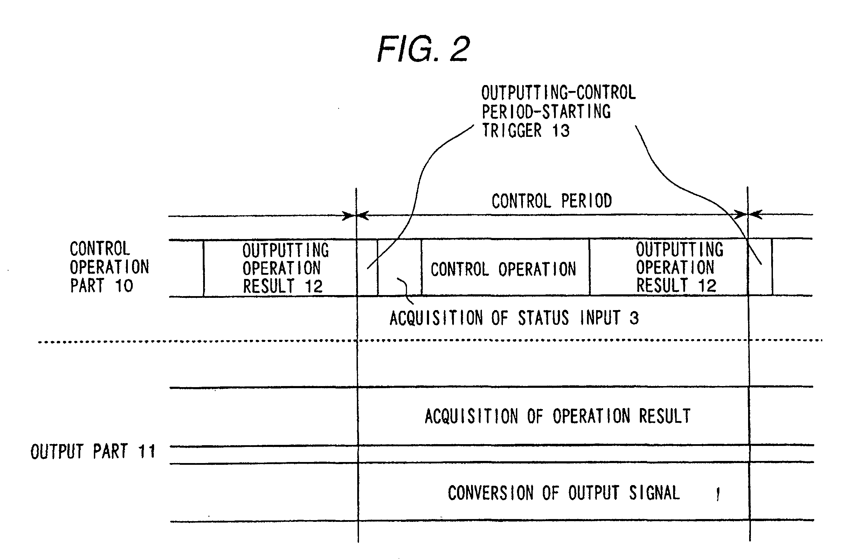

FIG. 2 is a time chart showing operations of the control operation part 10 and the output part 11 shown in FIG. 1. The control operation part 10 outputs the control period-starting trigger 13 at the beginning of the control period. Next, the control operation part 10 acquires the status input 3 in order to execute the control operation. The control operation is executed based on the acquired value, and the operation output 12 is output after completion of the operation. When transition to the next control period is made, the control period-starting trigger 13 is output, and from then on the similar processing is repeated.

The output part 11 acquires the operation output 12 in the precedent control period when the control period-starting trigger 13 is input. After that, by the timer interruption 113, the output part 11 is started to execute the processing to convert the value of the acquired operation output to the alternating signal.

As described above, during the same control period, the control operation part 10 and the output part 11 are operated independently without interference with each other.

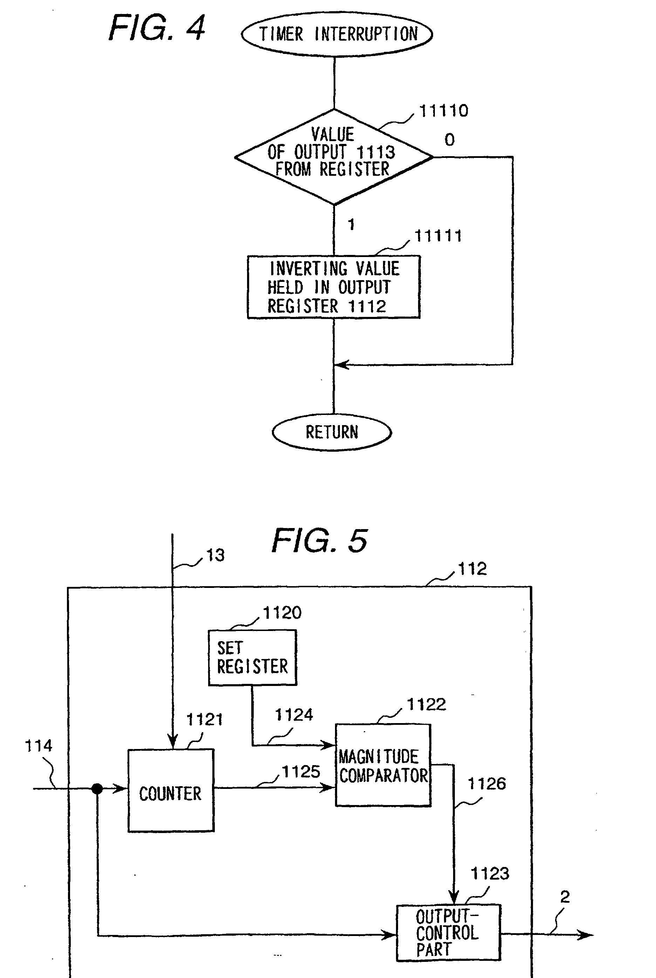

FIG. 3 is a block diagram showing the configuration of the alternating output part 111 shown in FIG. 1. As shown in FIG. 3, the alternating signal-output part 111 is composed of a register 1110 for holding the value of the operation output 12; an alternating ouput-generating part 1111 for generating an alternating signal and outputting the alternating signal 1114; and an output register 1112 for holding the output alternating output 1114.

The register 1110 acquires the operation output 12 when the control period-starting trigger 13 is input. Then, the register 1110 holds the value of the acquired operation output 12 until the control period-starting trigger 13 is input again. That is, during one control period, the value in the register 1110 is not changed, and the value is changed only when the transition to the next control period is made.

The output register 1112 holds the value of the alternating output 114 until an alternating output 1114 to the output register 1112 is changed.

The alternating ouput-generating part 1111 is started operation by the timer interruption 113. Operation of the alternating ouput-generating part 1111 will be described below, referring to the flowchart of FIG. 4. In Step 11110, the alternating ouput-generating part 1111 judges whether the value of the output from the register 1110 is a logical value of 1 or a logical value of 0. If the logical value of 1, the alternating ouput-generating part 1111 inverses the value held in the output register 1112 (changed to a logical value of 0 when the logical value held in the output register 1112 is 1, and changed to a logical value of 1 when the logical value held in the output register 1112 is 0). If the logical value of 0, the value held in the output register 1112 is not changed, and input to the output register 1112. As described above, the alternating ouput-generating part 1111 can convert the operated result held in the register to an alternating signal or a fixed value signal.

Since the input value to the register 1112 is changed when operation of the alternating ouput-generating part 1111 is started by the timer interruption 113, the signal period of the alternating output 114 is determined by the interval of occurrence of the timer interruption 113.

FIG. 5 is a block diagram showing the configuration of the output-monitoring part 112 shown in FIG. 1. The output-monitoring part 112 is composed of a counter 1121 for measuring number of alternating times of the alternating output 114; a set register 1120 for holding an upper limit 1124 of a preset alternating times; a magnitude comparator for comparing a value 1125 from the counter 1121 with the preset counter upper limit 1124; and an output control part 1123 for controlling outputting/stopping of the alternating signal. Therein, the counter 1121 comprises a measuring means, the set register 1120 comprises an upper limit setting means, the magnitude comparator 1122 and the output control part 1123 comprise individual output control means.

The counter 1121 measures number of output times of the alternating signal from observing the rising edge of the alternating output 114 when the alternating output is output. The value of the counter 1121 is reset when one pulse of the control period-starting trigger 13 is input. The magnitude comparator 1122 outputs an output stopping signal 1126 as a logical value of 1 when a value 1125 from the counter 1121 becomes larger than the upper limit 1124 from the set register 1120.

The output stopping signal 1126 is output to the output control part 11, and the output control part 11 prevents the alternating signal from outputting as the control output 2 when the output stopping signal becomes a logical value of 1. At that time, the counter 1121 continues the measuring operation , and accordingly the value 1125 from the counter 1121 is continued to be in a state larger than the counter upper limit 1124. Therefore, the magnitude comparator 1122 continues to output an output stopping signal 1126 as a logical value of 1, and thereby the control output 2 is continued to be output as a fixed value, that is, as a safety side output.

The time when the value 1125 from the counter 1121 becomes larger than the counter upper limit 1124 is in the state that the pulse signal is not output from the control period-starting trigger 13 even if time longer than the control period is elapsed and the counter 1121 is not reset. By regarding this state as a state that an abnormality occurs in the control operation part 10, safety of the system can be secured.

Therein, in a case where the counter upper limit 1124 is small, the value 1125 of the counter 1121 becomes larger than the counter upper limit 1124 during the control period, and accordingly the control output may be stopped to be output though no abnormality occurs in the system. Therefore, letting the control period be Tc, the alternating signal period be Tx, and the counter upper limit be Nr, outputting of the alternating signal during the control period can be guaranteed by setting

$$Nr > (Tc/Tx).$$

Further, by sending the output stopping signal 1126 to the outside, it is possible to inform a higher level control unit of the abnormality detected by the output-monitoring part 112, or to construct the system so as to break the system power supply.

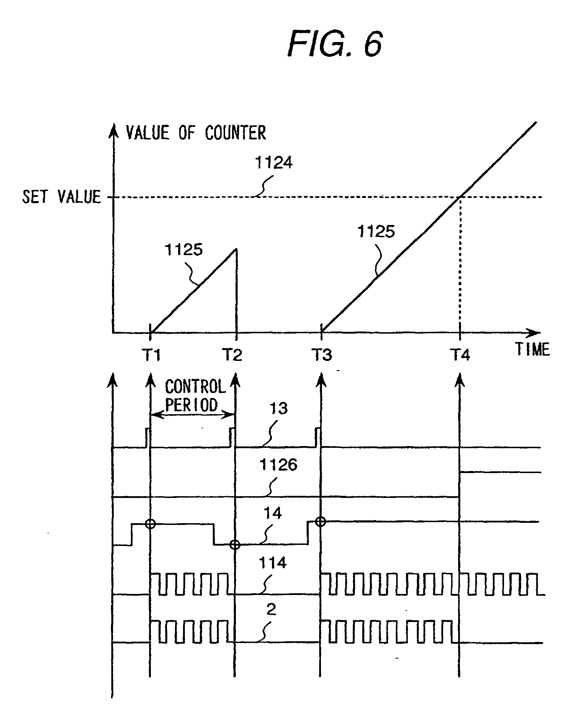

FIG. 6 is a time chart time-sequentially expressing the operation of the counter 1121 shown in FIG. 5 and various signals in regard to the outputs. Referring to FIG. 6, by observing the falling edge of the control period-starting trigger 13 at the timing of T1, the counter 1121 is reset. Since the value of the operation output 14 at T1 is 1, the alternating output 114 of the alternating signal is output. The counter 1121 measures number of alternating times of the alternating output 114. Since the value of the counter does not reach the set value at the timing of T2, the alternating signal continues to be output as the control output 2 until T2.

When the falling edge of the control period-starting trigger 13 is detected at T2, the counter 1121 is reset again. Since the value of the operation output 14 at T2 is 0, the alternating output 114 of the fixed value (0 fixed value in the chart) is output. Because there is no signal change in the alternating output 114, the counter 1121 does not perform measurement, and the value of the counter 1121 is not increased.

Next, the value of the counter 1121 is started to be increased from the timing T3, similarly to the timing of T1. However, at that time, when an abnormality occurs in the control operation part 10 and the operation processing is stopped, the control period-starting trigger 13 does not appear though the control period has elapsed, and accordingly the counter 1121 continues measuring.

Then, when the value 1126 from the counter 1121 becomes larger than the set value 1124 at the timing of T4, the logical value of 1 is output in the output stopping signal 1126 after T4. The control output 2 outputs the alternating signal until T4, but after T4 the control output 2 continues to output the logical value of 0 due to the output stopping signal 1126, and accordingly the system is kept in the safety side.

As one of the most simple applied example, it may be considered that soundness of a system itself is expressed by outputting an alternating signal. In this case, any special control operation is not necessary, and the operation output 14 is always the logical value of 1, and it is sufficient that the control operation part 10 only outputs the pulse signal as the control period-starting trigger 13 every control period. By doing so, the alternating output part 11 continues to output the alternating signal. When an abnormality occurs in the system and the processing of the control operation part 10 is stopped, outputting of the alternating signal is prevented by the output-monitoring part 112 because the control period-starting trigger 13 is not output. Therefore, the soundness of the system can be known by presence of the outputting of the alternating signal.

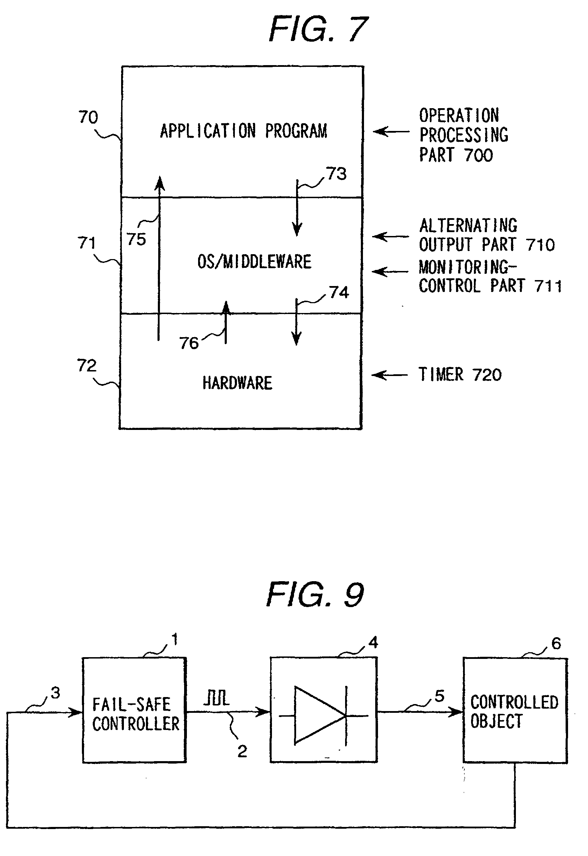

Although the above description has made on the example to which the present invention is applied in a form of hardware, each of the constituent elements may be materialized by software, as shown in FIG. 7. In this case, a part of an application program 70 is allocated to a control operation part 700, a part of OS/middleware 71 is allocated to an alternating output part 710 and an output-monitoring-control part 711, and a part of hardware 72 is allocated to a timer 720. The application program 70 executes processing with a constant control period based on a status input 75, and a timer interruption 76 occurs every alternating period by the timer 720 inside the hardware 72, and alternating output processing is executed as the interruption processing referring to an operation output 73. The OS/middleware 71 can control outputting/stopping of the output 74 by measuring number of executing times of the interruption processing to execute output monitoring processing.

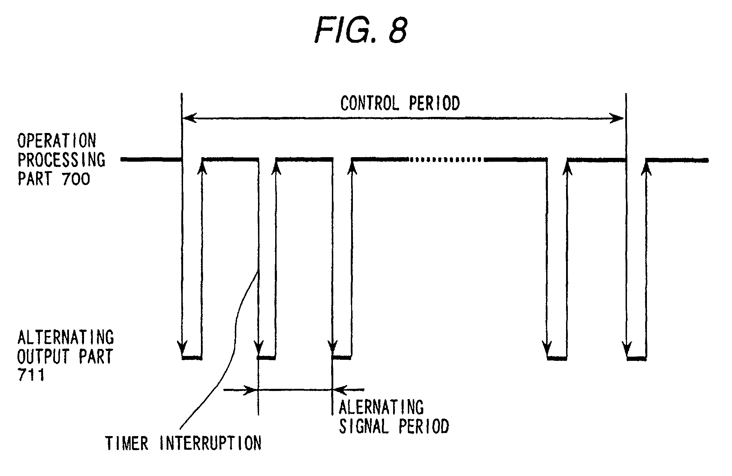

FIG. 8 is a time chart showing operations of the control operation part 700 and the alternating output part 710 in the system configuration shown in FIG. 7. During execution of processing in the control operation part 700, execution is shifted to processing in the alternating output part 710 by the timer interruption 76 of every alternating signal period. After completion of execution of the processing in the alternating output part 710, execution is returned to the processing in the control operation part. Since the alternating signal period is controlled by the timer interruption 76, the control operation part 700 needs not to be conscious of the output processing of every alternating period. Therefore, by using the timer interruption 76, the control operation part 700 and the alternating output part 710 can be operated in asychronism with each other.

As having been described above, according to the present invention, since the output part for executing the output processing of the alternating signal is separated from the control operation part, the control operation part can easily create and change the operation processing program without taking the output processing of the alternating signal into consideration, and accordingly the productivity of the system can be improved.

since the alternating signal is stopped to be output when occurrence of an abnormality in said control operating part is recognized by monitoring the alternating signal, the safety of the system can be secured.

**Claims**

1. A fail-safe controller (1) comprising:

   a control operation part (10) for executing operation processing by acquiring a status input (3) of a controlled object, and outputting the operation processed result (12); and
   an output part (11) for converting the operation processed result (12) to an alternating signal, outputting said alternating signal as a control output (2) for controlling said object, and monitoring said alternating signal to stop outputting the alternating signal when the occurrence of an abnormality is recognised,

   **characterised in that** the output part (11) is adapted to convert the operation processed result (12) in asynchronism with the operation processing in said control operation part (10), and to stop outputting the alternating signal when an abnormality occurs in said control operation part (10).

2. The controller of claim 1, wherein said control operation part (10) supplies said output part (11) with a signal for instructing starting processing of converting the operation processed result (12) to the alternating signal.

3. The controller of claim 1 or 2, wherein said output part (11) comprises a timer (110) for setting a period of the alternating signal.

4. The controller of any preceding claim, wherein said output part (11) comprises:

   measuring means (1121) for measuring the number of alternating times of the converted alternating signal;
   upper limit setting means (1120) for setting an upper limit of alternating times; and
   an output control means (1123) for stopping outputting said control output (2) when the number of said alternating times reaches said upper limit.

5. The controller of claim 4, wherein said upper limit setting means (1120) is capable of changing the set upper limit of alternating times.

6. The controller of claim 4 or 5, wherein said output control means (1123) outputs an information signal when the number of alternating times reaches said upper limit.

**Patentansprüche**

1. Fehlersichere Steuerung (1) mit:

    einem Steueroperationsabschnitt (10) zum Ausführen einer Operationsverarbeitung durch Erfassen einer Statuseingabe (3) eines gesteuerten Objekts, und zum Ausgeben des operationsverarbeiteten Resultats (12); und
    einem Ausgabeabschnitt (11) zum Konvertieren des operationsverarbeiteten Resultats (12) in ein alternierendes Signal, zum Ausgeben des alternierenden Signals als eine Steuerausgabe (2) zum Steuern des Objekts, und zum Überwachen des alternierenden Signals, damit dessen Ausgabe beendet wird, wenn das Auftreten einer Anomalität erkannt wird,

    **dadurch gekennzeichnet, daß** der Ausgabeabschnitt (11) zum Konvertieren des operationsverarbeiteten Resultats (12) in Asynchronität mit der Operationsverarbeitung in dem Steueroperationsabschnitt (10) und zum Beenden der Ausgabe des alternierenden Signals, wenn eine Anomalität in dem Steueroperationsabschnitt (10) auftritt, ausgelegt ist.

2. Steuerung nach Anspruch 1, wobei der Steueroperationsabschnitt (10) dem Ausgabeabschnitt (11) ein Signal zuführt, um den Verarbeitungsstart der Konvertierung des operationsverarbeiteten Resultats (12) in das alternierende Signal auszulösen.

3. Steuerung nach Anspruch 1 oder 2, wobei der Ausgabeabschnitt (11) einen Zeitgeber (110) zum Einstellen der Periode des alternierenden Signals umfaßt.

4. Steuerung nach einem vorstehenden Ansprüche, wobei der Ausgabeabschnitt (11) umfaßt:

    eine Meßeinrichtung (1121) zum Messen, wie oft das konvertierte alternierende Signal alterniert;
    eine Obergrenzwerteinstelleinrichtung (1120) zum Einstellen eines oberen Grenzwerts von Alternierungen; und
    eine Ausgabesteuereinrichtung (1123) zum Beenden der Ausgabe der Steuerausgabe (2), wenn die Anzahl der Alternierungen den oberen Grenzwert erreicht.

5. Steuerung nach Anspruch 4, wobei die Obergrenzwerteinstelleinrichtung (1120) zum Ändern des eingestellten oberen Grenzwertes der Alternierungen ausgelegt ist.

6. Steuerung nach Anspruch 4 oder 5, wobei die Ausgabesteuereinrichtung (1123) ein Informationssignal ausgibt, wenn die Anzahl der Alternierungen den oberen Grenzwert erreicht.

**Revendications**

1. Dispositif de commande à sécurité intégrée (1) comportant :

    une partie d'opération de commande (10) pour exécuter un traitement opérationnel par acquisition d'une entrée d'état (3) d'un objet commandé, et émettre le résultat traité opérationnel (12), et
    une partie de sortie (11) pour convertir le résultat traité opérationnel (12) en un signal alternatif, émettre ledit signal alternatif en tant que sortie de commande (2) pour commander ledit objet, et surveiller ledit signal alternatif pour stopper l'émission du signal alternatif lorsque l'apparition d'une anomalie est reconnue,

    **caractérisé en ce que** la partie de sortie (11) est adaptée pour convertir le résultat traité opérationnel (12) en synchronisation avec le traitement opérationnel de ladite partie d'opération de commande (10), et pour stopper l'émission du signal alternatif lorsqu'une anomalie apparaît dans ladite partie d'opération de commande (10).

2. Dispositif de commande selon la revendication 1, dans lequel ladite partie d'opération de commande (10) alimente ladite partie de sortie (11) à l'aide d'un signal destiné à demander le début d'un traitement de conversion du résultat traité opérationnel (12) en le signal alternatif.

3. Dispositif de commande selon la revendication 1 ou 2, dans lequel ladite partie de sortie (11) comporte une minuterie (110) pour établir une période du signal alternatif.

4. Dispositif de commande selon l'une quelconque des revendications précédentes, dans lequel ladite partie de sortie (11) comporte :

    des moyens de mesure (1121) pour mesurer le nombre d'alternances du signal alternatif converti,
    des moyens d'établissement de limite supérieure (1120) pour établir une limite supérieure d'alternances, et
    des moyens de commande de sortie (1123) pour stopper l'émission de ladite sortie de commande (2) lorsque le nombre desdites alternances atteint ladite limite supérieure.

5. Dispositif de commande selon la revendication 4, dans lequel lesdits moyens d'établissement de limite supérieure (1120) sont capables de changer la limite supérieure établie d'alternances.

6. Dispositif de commande selon la revendication 4 ou 5, dans lequel lesdits moyens de commande de sortie (1123) émettent un signal informationnel lorsque le nombre d'alternances atteint ladite limite supérieure.

# FIG. 1

# FIG. 3

## FIG. 2

OUTPUTTING-CONTROL
PERIOD-STARTING
TRIGGER 13

CONTROL PERIOD

CONTROL OPERATION PART 10

OUTPUTTING OPERATION RESULT 12

CONTROL OPERATION

OUTPUTTING OPERATION RESULT 12

ACQUISITION OF STATUS INPUT 3

ACQUISITION OF OPERATION RESULT

OUTPUT PART 11

CONVERSION OF OUTPUT SIGNAL

EP 1 132 788 B1

**FIG. 4**

**FIG. 5**

# FIG. 6

## FIG. 7

70 — APPLICATION PROGRAM ←— OPERATION PROCESSING PART 700

73

75

71 — OS/MIDDLEWARE ←— ALTERNATING OUTPUT PART 710
←— MONITORING-CONTROL PART 711

74

76

72 — HARDWARE ←— TIMER 720

## FIG. 9

3 — 1 FAIL-SAFE CONTROLLER — JЛL — 2 — 4 ▷ — 5 — 6 CONTROLLED OBJECT

13

# FIG. 8

CONTROL PERIOD

OPERATION
PROCESSING
PART 700

ALTERNATING
OUTPUT PART
711

ALERNATING
SIGNAL PERIOD

TIMER INTERRUPTION

EP 1 132 788 B1

# FIG. 10